# EUROPEAN PATENT SPECIFICATION

(11) **EP 1 490 999 B1**
(45) Date of publication and mention of the grant of the patent: **15.10.2008**
(21) Application number: 03712034.2
(22) Date of filing: 17.03.2003
(51) Int. Cl.: H04L 12/14, H04M 15/00

(54) **METHOD AND SYSTEM FOR CONSTRUCTION AND COMMUNICATION OF DATA ON NETWORK ACCESS AND SERVICE TRANSACTIONS IN A TELECOMMUNICATION NETWORK**
VERFAHREN UND VORRICHTUNG ZUM ERSTELLEN UND ÜBERTRAGEN VON GEBÜHRENDATA AUF NETZWERKZUGANGS UND SERVICE-TRANSAKTIONEN IN EINEM TELEKOMMUNIKATIONSNETZ
PROCEDE ET SYSTEME DE CONSTRUCTION ET DE COMMUNICATION DE DONNEES CONCERNANT DES TRANSACTIONS DE SERVICE ET D'ACCES RESEAU DANS UN RESEAU DE TELECOMMUNICATION

(30) Priority: 26.03.2002 GB 0207088
(43) Date of publication of application: 29.12.2004
(73) Proprietor: MOTOROLA, INC., Schaumburg, IL 60196 (US)
(72) Inventor: FOSTER, Gerry, Swindon, Wiltshire SN1 4JT (GB); KHAN, Farah, 26 Nightwood Copse, Swindon, Wiltshire SN5 5DD (GB)
(74) Representative: Jepsen, René Pihl
(86) International application number: PCT/EP2003/002751
(87) International publication number: WO 2003/081842

(56) References cited:
- EP-A- 0 905 961
- EP-A- 1 298 599
- WO-A-00/24161
- WO-A-01/58110
- WO-A-02/21865
- "Universal Mobile Telecommunications System (UMTS); Service Requirement for the Open Services Access (OSA); Stage 1(EGPP TS 22.127 verion 4.2.0 Release 4)" ETSI TS 122 127, [Online] XP002219713 Retrieved from the Internet: <URL:http:77WEBAPP.ETSI.ORG/exchangefolder > [retrieved on 2001-06]

## Description

### Technical Field

The present invention relates to telecommunication systems, and in particular to a method and a system for construction and communication of data on network access and service transactions in a telecommunication network to provide charging and billing in said telecommunication network. The invention is applicable to, but not limited to, wireless communication systems such us third generation packet data and communication networks.

### Background

With the advent of the third generation mobile technology, the end-user will be able to access various types of services over their mobile phones through the use of the multi-service IP network. Therefore the options for charging extend further than charging only for mobile access to the network to charging for content as well. Examples of such content to be charged could be services like e-mail or e-commerce transactions carried out during a session.

However, an Internet Protocol (IP) network has a heterogeneous infrastructure comprising of a wide range of technologies and vendors. The result of this situation is that each network element and service provider are likely to capture the charging data independently, as the usage parameters for each kind of service are usually distinct from each other. This leads to many disparate approaches to charging which is expensive to manage, administer and deploy.

Examples of prior art systems are provided in e.g. European patent application EP 1 298 599 A which discloses a method of operating an accounting system and accounting system; European patent application EP 0 905 961 A which discloses a method for billing the use of an Internet service with service controller unit and service providing device; Patent Cooperation patent application WO 01/58110 A which discloses a network gateway-based billing method; Patent Cooperation patent application WO 02/21865 A which discloses a billing arrangement for a service in a telecommunication system; Patent Cooperation patent application WO 00/24161 A which discloses a charging method in telecommunications network and the document "Universal Mobile Telecommunications System (UMTS); Service Requirement for the Open Services Access (OSA); Stage 1 (3GPP TS 22.127 version 4.2.0 Release 4)" ETS1 TS 122 127, XP002219713 which enables applications to make use of network functionality through an open standardized interface.

The systems presently available are proprietary billing systems which have no standard interfaces in place to exchange usage, provisioning and control information, therefore there is no unified bill generated for the end-user. Even the standards have enshrined the historical evolution of separate systems for contract billing (Call and Event data) and prepaid charging (CAMEL).

Moreover these proprietary systems do not have a standard format of Charging Data Record (CDR), which ultimately hinders the operation of IP network elements and support systems to be able to communicate cost-effectively. Presently there are various CDRs generated within a network for each individual event caused by the user. Sometimes some events arc missed out because of lack of collation of CDR for the individual user. In some cases there is no way to identify which user accessed which service because in the end it is all data or packets which are going through the network. This creates a barrier to bringing next generation services to the market.

### Summary of the Invention

There is a need for a method and a system for construction and communication of data on network access and service transactions in a telecommunication network to provide charging and billing in said telecommunication network, which alleviate or overcome the disadvantages of the prior art.

The method and the system according to the present invention make possible to unite billing and charging into a common framework. Result is one system presentation for end-user delivered by the third generation packet data networks for both the user equipment (i.e. wire and wireless communication devices, Portable Digital Assistants (PDA), laptop, desktop and palmtop computers) and the network.

A method in accordance with claim 1 is provided for construction and communication of data on network access and service transactions in a telecommunication network to provide charging and billing in said telecommunication network.

The mediation and routing engine processes the SDR to meet the format required by additional network management systems. The additional network management systems are: fraud management, data warehousing and security systems.

The rating engine expands said tags with the transaction details, then calculates and adds charges depending on type of said transaction.

When transaction requires credit authorization and authentication the SDR is sent to a monetary authorization server.

An advantage of the present invention is that it makes possible to gather data on transmission independently on the service provider and network element involved in the transmission.

Another advantage of the present invention is that the method is easy to manage and deploy because it provides a standard interface for provisioning and control information what results in unified bill generated for the end user. Additionally one type of generated CDR within a telecommunication network makes it possible to increase effectivenes of network components.

Another advantage of the invention is that it allows identifying, which user accessed, which service before finally generating a reliable bill.

In accordance with another aspect of the present invention, there is provided a system in accordance with claim 6 for carrying out the method according to the present invention as described above.

The system according to the present invention may have rating, billing and monetary authorization servers aggregated into one or more separate devices.

### Brief description of the drawings

The present invention will be understood and appreciated more fully from the following detailed description taken in conjunction with the drawings in which:
Figure 1 is a flowchart illustrating a method for charging and billing for network access and service transactions in accordance with an embodiment of the invention;
Figure 2 is a schematic illustration of a system for charging and billing for network access and service transactions in accordance with an embodiment of the invention.

### Detailed description of the preferred embodiment

The term User Equipment (UE) herein below is a general term that includes wire and wireless communication devices, Portable Digital Assistants (PDA), laptop, desktop and palmtop computers.

The term Event Detail Record (EDR) herein below is a general term used to denote event characteristics, for any activity that can be monitored and therefore is accountable.

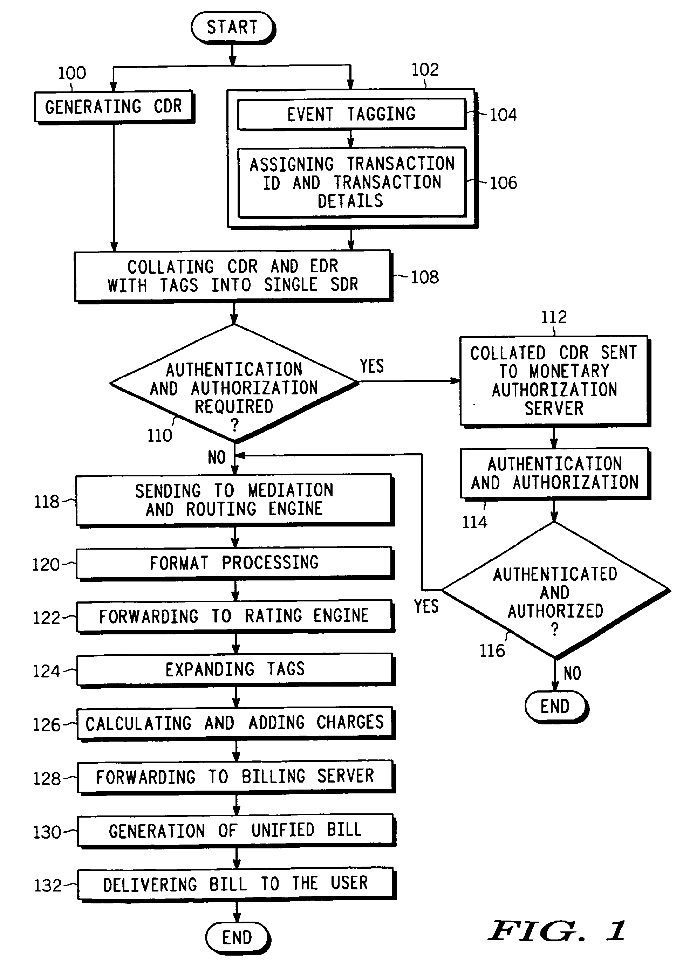

Referring to Fig. 1, in step 100 for each connection of a User Equipment to said telecommunication network a Charging Data Record (CDR) is generated. The CDR is generated by a network node. Independently service providing servers accessed by the UE generate in step 102 Event Detail Records (EDRs). Generation of said EDRs is performed in two substeps. In substep 104 each event caused by a user of said UE during said connection is tagged and in step 106 transaction ID and transaction details are assigned to said tag used for tagging said event in previous substep. Said transaction details being retrieved from a network equipment. In step 108 the CDR and EDR are collated with the tags to form a single Session Detail Record (SDR). In the following step, 118, said SDR is sent to a mediation and routing engine. Said mediation and routing engine processes in step 120 said SDR into a format acceptable by a billing server, a rating engine and other network management systems. After processing 120 the mediation and routing engine delivers in step 122 said SDR to said network management systems and said rating engine. The rating engine expands 124 said tags with said transaction details and calculates and adds in step 126 charges according to type of said transaction. In the next step, 128, said SDR is forwarded 128 to said billing server for generating 130 a unified bill. In the final step, 132, said unified bill is delivered to said UE user.

Further aspects, variations and details of the invention are described in the following.

When the transaction requires authentication and authorization 110, said SDR is sent 112 to a monetary authorization server. Depending on result of said authentication and authorization 114 the process is stopped if authentication or authorization failed. When authentication and authorization passed, the SDR is sent to a mediation and routing engine in step 118.

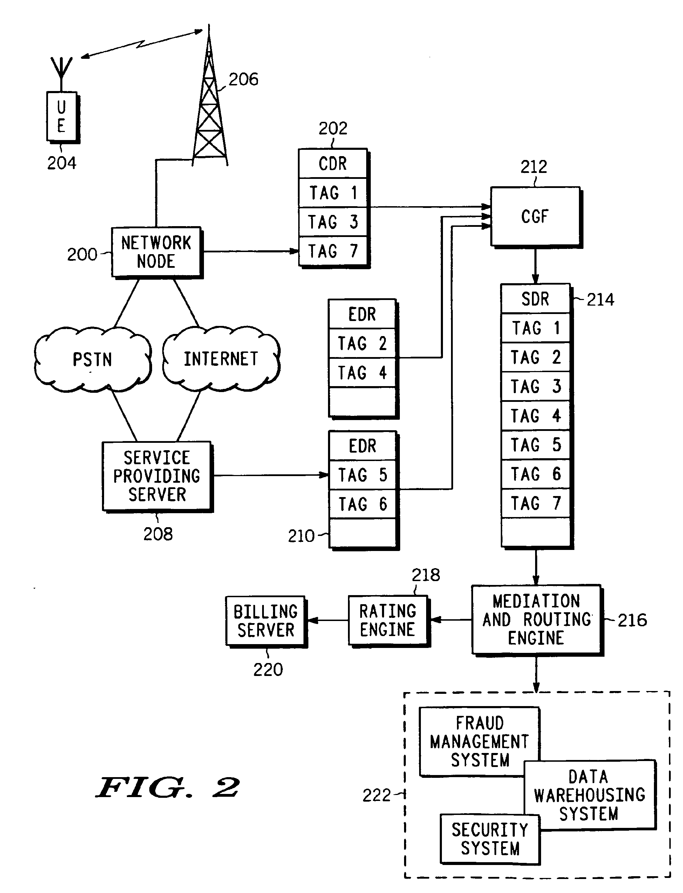

Reference is now made to Fig. 2, which depicts a system for construction and communication of data on network access and service transactions in a telecommunication network to provide charging and billing in said telecommunication network operative in accordance with the embodiment of the present invention as illustrated on Fig. 1.

The system according to present invention has a network node 200 for generating a CDR 202. CDR 202 is generated for each connection of a UE 204 to said telecommunication network 206. Each network element is equipped with a tagging function for tagging each event caused by the user of said UE 204 during said connection. The system also comprises a service providing server 208 for generating an Event Detail Record (EDR) 210.

Depending on type of service accessed by the user the service providing server 208 may be a content server, e-commerce server or server providing other kind of services.

The system further comprising a Charging Gateway Functionality (CGF) 212 for collating said CDRs 202 and EDRs 210 with said tags to generate a Session Detail Record (SDR) 214.

It is also important to note that a session in the SDR means user session and all the services used by the user will be a subset of the user session. This causes that the SDR is a single consolidated form giving details of user activity for the entire duration of user connection to the telecommunication network.

In alternative embodiments the CGF 212 can be incorporated with either the network node 200 or mediation and routing engine or can be a separate physical device on its own.

A mediation and a routing engine 216 of the system are for processing of said SDR 214 into a format compatible with format acceptable by a rating engine 218 which is designed for expanding said tags and calculating and adding charges. The system also comprises a billing server 220 for generating a unified bill, for said UE 204 user.

In different embodiments the network node for generating CDRs may be a GPRS Serving Node, a Mobile Switching Centre, a Switch or other network element.

In another embodiment the system comprises monetary authorization server, which is contacted when a transaction, which was done during said connection requires credit authentication and authorization.

In yet another alternative embodiments the rating, billing and monetary authorization servers are aggregated in any combination as one, two or three separate devices.

In another embodiment the mediation and routing engine 216 is connected to additional network systems 222 such as fraud management system, data warehousing system and security system.

In general the fraud management system is a peripheral system, which analysis the data in CDRs to identify the users who are attempting some fraud by not using the network properly. The data warehousing system is system, which stores all the data for future reference to answer customer complains or to make other subscription related changes. Security system maintains the security of passwords and other sensitive data passing over the network.

It will be understood that the invention tends to provide the following advantages singly or in any combination:
- possibility of gathering data on transmission independently on the service provider and network element involved in the transmission,
- the method is easy to manage and deploy,
- unified bill generated for the end user,
- one type of generated CDR within a telecommunication network makes it possible to increase effectivenes of network components,
- the method allows identifying which user accessed which service, what results in generating a reliable bill.

## Claims

1. A method for construction and communication of data on network access and service transactions in a telecommunication network to provide charging and billing in said telecommunication network that generates (100) a Charging Data Record for each connection of a User Equipment to said telecommunication network, said method **characterized by** the following steps:
generating (102) an Event Detail Record in two substeps:
(b1) tagging (104) each event caused by a user of said UE during said connection,
(b2) assigning (106) transaction 1D and transaction details to said tag used for tagging said event in previous step, wherein said transaction details being retrieved from a network equipment,
collating (108) said Charging Data Record and Event Detail Record with said tags to obtain a Session Detail Record,
sending (118) said Session Detail Record to a mediation and routing engine,
processing (120) said Session Detail Record into a format acceptable by a billing server,
forwarding (122) said Session Detail Record to a rating engine,
expanding (124) said tags with said transaction details,
calculating and adding (126) charges according to type of said transaction.
forwarding (128) said Session Detail Record to a billing server for generating (130) a unified bill,
sending (132) said unified bill to said User Equipment user.

2. A method according to claim 1 wherein said mediation and routing engine processes (120) said Session Detail Record into a format compatible with format acceptable by said rating engine, said billing server and additional network management systems and delivers (122) said Session Detail Record to said network management systems and said rating engine.

3. A method according to claim 2 wherein said additional network management systems are fraud management system.

4. A method according to claim 1 or claim 2 or claim 3 wherein said rating engine expands (124) said tags with said transaction details and calculates and adds (126) charges according to type of said transaction.

5. A method according to claim 1 or claim 2 or claim 3 wherein SDR is sent (112) to a monetary authorization server when said transaction requires credit authentication and authorization (116).

6. A system with a network node (200) for generating a Charging Detail Record (202), for each connection of User Equipment (204) to a telecommunication network (206), said system **characterized by** the following components:
- a tagging function at each network element and service providing servers for tagging each event caused by the user of said User Equipment (204) during said connection and assigning transaction ID and transaction details to said tag used for tagging said event in previous step, wherein said transaction details being retrieved from a network equipment,
- a service providing server (208) for generating an Event Detail Record (210),
- a Charging Gateway Functional block (212) for collating said Charging Data Record (202) and Event Detail Record (210) with said tags to generate a Session Detail Record (214) and for sending said Session Detail Record (214) to a mediation and routing engine (216),
- said mediation and routing engine (216) for processing and forwarding of said Session Detail Record (214) into a format compatible with format acceptable by a rating engine (218),
- said rating engine (218) for expanding said tags and calculating and adding charges according to type of said transaction,
- a billing server (220) for generating a unified bill, for said User Equipment (204) user.

7. A system according to claim 6 wherein said network node is a GPRS Serving Node, a Mobile Switching Centre, a Switch or other network element.

8. A system according to claim 6 wherein said system further comprising monetary authorization server.

9. A system according to claim 8 wherein said rating, billing and monetary authorization servers arc aggregated into one or more separate devices.

## Patentansprüche

1. Verfahren zum Erstellen und Kommunizieren von Daten bezüglich Netzwerkzugangs- und Dienst-Transaktionen in einem Telekommunikationsnetzwerk, um eine Gebührenerfassung und Abrechnung in dem Telekommunikationsnetzwerk zur Verfügung zu stellen, das für jede Verbindung einer Anwenderausrüstung zu dem Telekommunikationsnetzwerk eine Gebührenerfassungsdatenaufzeichnung erzeugt (100), wobei das Verfahren durch die folgenden Schritte **gekennzeichnet** ist:
Erzeugen (102) einer Ereignisdetailaufzeichnung in zwei Unterschritten:
(b1) Bezeichnen (104) eines jeden durch einen Anwender der Anwenderausrüstung während der Verbindung verursachten Ereignisses;
(b2) Zuweisen (106) einer Transaktions-ID und von Transaktionsdetails zu der Bezeichnung, die zum Bezeichnen des Ereignisses in einem vorherigen Schritt verwendet wurde, wobei die Transaktionsdetails von einer Netzwerkausrüstung abgerufen werden,
Vereinigen (108) der Gebührenerfassungsdatenaufzeichnung und der Ereignisdetailaufzeichnung mit den Bezeichnungen, um eine Sitzungsdetailaufzeichnung zu erhalten,
Senden (118) der Sitzungsdetailaufzeichnung an eine Vermittlungs- und Routing-Maschine,
Verarbeiten (120) der Sitzungsdetailaufzeichnung in ein Format, das von einem Abrechnungsserver akzeptierbar ist,
Weiterleiten (122) der Sitzungsdetailaufzeichnung zu einer Einstufungsmaschine,
Erweitern (124) der Bezeichnungen mit den Transaktionsdetails, Berechnen und Hinzufügen (126) von Gebühren entsprechend einer Art der Transaktion,
Weiterleiten (128) der Sitzungsdetailaufzeichnung zu einem Abrechnungsserver zum Erzeugen (130) einer einheitlichen Rechnung,
Senden (132) der einheitlichen Rechnung an den Anwender einer Anwenderausrüstung.

2. Verfahren gemäß Anspruch 1, wobei die Vermittlungs- und Routing-Maschine die Sitzungsdetailaufzeichnung in ein Format verarbeitet (120), das mit einem Format kompatibel ist, das durch die Einstufungsmaschine, den Abrechnungsserver und zusätzliche Netzwerkmanagementsysteme akzeptierbar ist, und die Sitzungsdetailaufzeichnung den Netzwerkmanagementsystemen und der Einstufungsmaschine zuführt (122).

3. Verfahren gemäß Anspruch 2, wobei die zusätzlichen Netzwerkmanagementsysteme Betrugsmanagementsysteme sind.

4. Verfahren gemäß Anspruch 1 oder Anspruch 2 oder Anspruch 3, wobei die Einstufungsmaschine die Bezeichnungen mit den Transaktionsdetails erweitert (124) und Gebühren gemäß einer Art der Transaktion berechnet und hinzufügt (126).

5. Verfahren gemäß Anspruch 1 oder Anspruch 2 oder Anspruch 3, wobei eine Sitzungsdetailaufzeichnung an einen monetären Autorisierungsserver gesendet wird (112), wenn die Transaktion eine Kreditanerkennung und -autorisierung (116) erfordert.

6. System mit einem Netzwerkknoten (200) zum Erzeugen einer Gebührenerfassungsdatenaufzeichnung (202), für jede Verbindung einer Anwenderausrüstung (204) zu einem Telekommunikationsnetzwerk (206), wobei das System durch die folgenden Komponenten **gekennzeichnet** ist:
- eine Bezeichnungsfunktion bei jedem Netzwerkelement und dienstbereitstellenden Server zum Bezeichnen eines jeden Ereignisses, das durch den Anwender der Anwenderausrüstung (204) während der Verbindung verursacht wird, und Zuweisen einer Transaktions-ID und von Transaktionsdetails zu der Bezeichnung, die zum Bezeichnen des Ereignisses in einem vorherigen Schritt verwendet wird, wobei die Transaktionsdetails von einer Netzwerkausrüstung abgerufen werden,
- einen dienstbereitstellender Server (208) zum Erzeugen einer Ereignisdetailaufzeichnung (210),
- einen funktionalen Gebührenerfassungs-Gateway-Block (212) zum Vereinigen der Gebührenerfassungsdatenaufzeichnung (202) und der Ereignisdetailsaufzeichnung (210) mit den Bezeichnungen, um eine Sitzungsdetailaufzeichnung (214) zu erzeugen, und zum Senden der Sitzungsdetailaufzeichnung (214) an eine Vermittlungs- und Routing-Maschine (216),
- die Vermittlungs- und Routing-Maschine (216) zum Verarbeiten und Befördern der Sitzungsdetailaufzeichnung (214) in ein Format, das mit einem Format kompatibel ist, das von einer Einstufungsmaschine (218) akzeptierbar ist,
- die Einstufungsmaschine (218) zum Erweitern der Bezeichnungen und Berechnen und Hinzufügen von Gebühren entsprechend einer Art der Transaktion,
- einen Abrechnungsserver (220) zum Erzeugen einer einheitlichen Rechnung für den Anwender einer Anwenderausrüstung (204).

7. System gemäß Anspruch 6, wobei der Netzwerkknoten ein GPRS-Dienstknoten, eine Funkvermittlungsstelle, ein Schalter oder ein anderes Netzwerkelement ist.

8. System gemäß Anspruch 6, wobei das System weiterhin einen monetären Autorisierungsserver umfasst.

9. System gemäß Anspruch 8, wobei die Einstufungs-, Abrechnungs- und monetären Autorisierungsserver in eine oder mehrere getrennte Vorrichtungen vereinigt werden.

## Revendications

1. Procédé pour la construction et la communication de données sur des transactions d'accès réseau et de services dans un réseau de télécommunication pour permettre une taxation et une facturation dans ledit réseau de télécommunication, qui génère (100) un Enregistrement de Données de Taxation pour chaque connexion d'un Equipement Utilisateur (UE) audit réseau de télécommunication, ledit procédé étant **caractérisé par** les étapes suivantes, consistant à:
générer (102) un Enregistrement de Détails d'Evénements en deux sous-étapes :
(b1) étiqueter (104) chaque événement provoqué par un utilisateur dudit UE pendant ladite connexion,
(b2) attribuer (106) une ID de transaction et des détails de transaction à ladite étiquette utilisée pour étiqueter ledit événement à l'étape précédente, où lesdits détails de transaction sont récupérés d'un équipement de réseau,
assembler (108) ledit Enregistrement de Données de Taxation et ledit Enregistrement de Détails d'Evénements avec lesdites étiquettes pour obtenir un Enregistrement de Détails de Session (SDR),
envoyer (118) ledit Enregistrement de Détails de Session à un moteur de médiation et de routage,
transformer (120) ledit Enregistrement de Détails de Session dans un format que peut accepter un serveur de facturation,
transférer (122) ledit Enregistrement de Détails de Session à un moteur de calcul de prix,
étendre (124) lesdites étiquettes avec lesdits détails de transaction,
calculer et ajouter (126) des taxes en fonction du type de ladite transaction,
transférer (128) ledit Enregistrement de Détails de Session à un serveur de facturation pour générer (130) une facture unifiée,
envoyer (132) ladite facture unifiée audit utilisateur de l'Equipement Utilisateur.

2. Procédé selon la revendication 1, dans lequel ledit moteur de médiation et de routage transforme (120) ledit Enregistrement de Détails de Session dans un format compatible avec un format que peuvent accepter ledit moteur de calcul de prix, ledit serveur de facturation et les systèmes de gestion de réseau supplémentaires et délivre (122) ledit Enregistrement de Détails de Session auxdits systèmes de gestion de réseau et audit moteur de calcul de prix.

3. Procédé selon la revendication 2, dans lequel lesdits systèmes de gestion de réseau supplémentaires sont un système de gestion des fraudes.

4. Procédé selon la revendication 1 ou la revendication 2 ou la revendication 3, dans lequel ledit moteur de calcul de prix étend (124) lesdites étiquettes avec lesdits détails de transaction, et calcule et ajoute (126) des taxes en fonction du type de ladite transaction.

5. Procédé selon la revendication 1 ou la revendication 2 ou la revendication 3, dans lequel un SDR est envoyé (112) à un serveur d'autorisation financière lorsque ladite transaction nécessite une authentification et une autorisation de crédit (116).

6. Système ayant un noeud de réseau (200) pour générer un Enregistrement de Détails de Taxation (202), pour chaque connexion de l'Equipement Utilisateur (204) à un réseau de télécommunication (206), ledit système étant **caractérisé par** les composants suivants :
- une fonction d'étiquetage au niveau de chaque élément de réseau et des serveurs de fourniture de services pour étiqueter chaque événement provoqué par l'utilisateur dudit Equipement Utilisateur (204) pendant ladite connexion et attribuer une ID de transaction et des détails de transaction à ladite étiquette utilisée pour étiqueter ledit événement à l'étape précédente, où lesdits détails de transaction sont récupérés d'un équipement de réseau,
- un serveur de fourniture de services (208) pour générer un Enregistrement de Détails d'Evénements (210),
- un bloc Fonctionnel de Passerelle de Taxation (212) pour assembler ledit Enregistrement de Données de Taxation (202) et ledit Enregistrement de Détails d'Evénements (210) avec lesdites étiquettes pour générer un Enregistrement de Détails de Session (214) et pour envoyer ledit Enregistrement de Détails de Session (214) à un moteur de médiation et de routage (216),
- ledit moteur de médiation et de routage (216) pour transformer et transférer ledit Enregistrement de Détails de Session (214) dans un format compatible avec un format que peut accepter un moteur de calcul de prix (218),
- ledit moteur de calcul de prix (218) pour étendre lesdites étiquettes, et calculer et ajouter des taxes en fonction du type de ladite transaction,
- un serveur de facturation (220) pour générer une facture unifiée pour ledit utilisateur de l'Equipement Utilisateur (204).

7. Système selon la revendication 6, dans lequel ledit noeud de réseau est un Noeud de Desserte GPRS, un Centre de Commutation du Service Mobile, un Commutateur ou un autre élément de réseau.

8. Système selon la revendication 6, dans lequel ledit système comprend, en outre, un serveur d'autorisation financière.

9. Système selon la revendication 8, dans lequel lesdits serveurs de calcul de prix, de facturation et d'autorisation financière sont regroupés en un ou plusieurs dispositifs séparés.
